(19) Europäisches Patentamt
European Patent Office
Office européen des brevets

(11) Publication number : **0 369 485 B1**

(12) **EUROPEAN PATENT SPECIFICATION**

(45) Date of publication of patent specification : **22.02.95 Bulletin 95/08**

(51) Int. Cl.$^6$ : **G10L 5/06**

(21) Application number : **89121349.8**

(22) Date of filing : **17.11.89**

(54) **Speaker recognition system.**

(30) Priority : **17.11.88 JP 291837/88**
**14.04.89 JP 96127/89**
**14.04.89 JP 96128/89**
**14.04.89 JP 96129/89**
**14.04.89 JP 96130/89**
**14.04.89 JP 96131/89**

(43) Date of publication of application : **23.05.90 Bulletin 90/21**

(45) Publication of the grant of the patent : **22.02.95 Bulletin 95/08**

(84) Designated Contracting States : **DE FR GB**

(56) References cited :
**EP-A- 0 285 352**
**US-A- 4 078 154**
**IEEE, AUDIO SPEECH AND SIGNAL PROCESSING MAGAZINE, vol. 3, no. 4, October 1986,pages 4-17, IEEE, New York, US; D. O'SHAUGHNESSY: "Speaker recognition"**
**ELECTRONICS AND COMMUNICATIONS IN JAPAN, vol. 57-A, no. 12, December 1974,pages 34-42; S. FURUI: "An analysis of long-term variation of featureparameters of speech and its application to talker recognition"**
**PROCEEDINGS OF CARNAHAN CONFERENCE ON CRIME COUNTERMEASURES, Kentucky, 16th -18th May 1979, pages 47-52; U. HOEFKER et al.: "A new system for authentication of voice"**

(56) References cited :
**IEEE TRANSACTIONS ON ACOUSTICS, SPEECH AND SIGNAL PROCESSING, vol. 36, no. 7,July 1988, pages 1162-1168, IEEE, New York, US; D.J. BURR: "Experiments onneural net recognition of spoken and written text"**
**ELECTRONICS AND COMMUNICATIONS IN JAPAN, vol. 56-A, no. 11, November 1973,pages 62-71; S. FURUI et al.: "Talker recognition by statistical features of speech sounds"**

(73) Proprietor : **SEKISUI KAGAKU KOGYO KABUSHIKI KAISHA**
**4-4 Nishitenma 2-chome**
**Kita-ku**
**Osaka shi Osaka (JP)**

(72) Inventor : **Nishimura, Shingo Sekisui Kagaku Kogyo K.K.**
**Applied Electronics Lab. Corporate Research Inst.**
**32, Wadai Tsukuba-shi Ibaraki (JP)**
Inventor : **Miyakawa, Masashi Sekisui Kagaku Kogyo K.K.**
**Applied Electronics Lab. Corporate Research Inst.**
**32, Wadai Tsukuba-shi Ibaraki (JP)**
Inventor : **Umino, Masayuki Sekisui Kagaku Kogyo K.K.**
**Applied Electronics Lab. Corporate Research Inst.**
**32, Wadai Tsukuba-shi Ibaraki (JP)**
Inventor : **Nonaka, Shigenobu Sekisui Kagaku Kogyo K.K.**
**Applied Electronics Lab. Corporate Research Inst.**
**32, Wadai Tsukuba-shi Ibaraki (JP)**

(74) Representative : **DIEHL GLAESER HILTL & PARTNER**
**Patentanwälte**
**Postfach 19 03 65**
**D-80603 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

The present invention relates to a speaker recognition system suitable for identifying or verifying a speaker on the basis of input speech by the use of an electronic lock, an on-line terminal such as an IC card, or the like.

Speaker recognition means the recognition of a speaker from his or her input speech and has two forms, speaker identification and speaker verification.

By speaker identification is meant the determination of the speaker who has uttered the input speech among registered speakers, while by speaker verification is meant the determination of whether or not the input speech can be regarded as the speech of a registered speaker.

Conventional speaker recognition systems are generally based on the following procedures, as disclosed in, for instance, Japanese Patent Publication No. 13956/1981 and the Transactions of the Institute of Electronics and Communication Engineers of Japan, Nov. 1973, Vol. 56-A No. 11 (Reference 1):

(1) Extraction of a feature quantity concerning the speaker which is contained in input speech;
(2) Calculation of the difference between a standard pattern extracted in advance in the same way as the procedure (1) stated above and the feature quantity extracted in the procedure (1) stated above; and
(3) In the case of speaker identification, display of a standard pattern in which the aforementioned difference is minimal to determine the speaker who has uttered the input speech. In the case of speaker veridication, setting a threshold in advance in the aforementioned difference, and if the difference is smaller than that threshold, the input speech is determined to have been uttered by the speaker displaying the standard pattern.

At this juncture, in Japanese Patent Publication No. 13956/1981, the correlation between spectrum parameters calculated from input speech, an average value of the parameters, and a standard deviation thereof are used as the aforementioned feature quantities.

With the above-described conventional speaker recognition systems, however, the following problems are encountered:

(1) The recognition rate declines with passage of time from the time from when the standard pattern was prepared. For instance, in the experimental results stated in Reference 1, after a lapse of three months following preparation of a standard pattern, the speaker identification rate declined from 100% to 85%, while the speaker verification rate declined from 99% to 91%.
(2) Real-time processing is difficult. In other words, although it is necessary to use complicated feature quantities in order to secure a recognition rate above a fixed level in conventional speaker recognition systems, a complicated processor is required to extract complicated feature quantities, and much processing time is involved.

Document EP 285 352 A2, Hopfield, discloses the division of an input voice signal into frequency bands by means of bandpass filters. The output of the bandpass filters is fed into stretchable delay means which apply their output signals to a neural network via an interconnection network. However, there is no disclosure of a timewise division of the input voice signal. Futhermore, the document fails to teach or suggest that a plurality of frames obtained from the input voice signal is divided into a plurality of blocks.

Document "Speaker Recognition", IEEE ASSP Magazine 3 (1986) Oct., No. 4, New York, NY USA, discloses the use of averaged parameters rather than a fulltime sequence of parameters used in speech recognition. However, only the use of long-term averages of speech parameters over all available data from each speaker is taught. The document fails to teach or suggest that a short utterance can be divided into blocks and feature quantities can be averaged with respect to each of these blocks to obtain meaningful information about the speaker.

The documents, Electronics and Communications in Japan, vol. 57-A, No. 12, December 1974, pages 34-42; S. Furui, "An Analysis of Long-term Variation of Feature Parameters of Speech and its Application to Talker Recognition", and proceedings of Carnahan Conference on Crime Countermeasures, Kentucky, May 16-18, 1979, pages 47-52; U. Hoefker et al., "A New System For Authentication of Voice", disclose the use of PACOR coefficients and high frequency pre-emphasis in the preprocessing stage.

Accordingly, an object of the present invention is to provide a speaker recognition system in which decline with time in the recognition rate is extremely small and which is capable of readily effecting real-time processing, thereby overcoming the above-described drawbacks of the conventional art. This object is solved by the speaker recognition system according to independent claim 1. Further advantageous features of this system are evident from the dependent claims.

To this end, in accordance with the present invention, the speaker recognition system recognizes a speaker on the basis of input speech by the use of a neural network, wherein the variation with time of an inherent characteristic of speech is used as an input to the neural network.

In addition, in accordance with the present invention, the variation with time of an average inherent characteristic of speech within a fixed time is used as the input to the neural network.

Furthermore, in accordance with the present invention, the neural network is provided with a plurality of layers.

The inherent characteristics of speech used in the present invention include a frequency characteristic of speech, a pitch frequency, a frequency characteristic of the speech waveform subjected to high-frequency emphasis, a linear prediction coefficient, and a PARCOR coefficient.

By a pitch frequency of speech is meant the reciprocal of a repeated cycle period (pitch cycle period) of vocal cord waves.

In addition, by high-frequency emphasis is meant the compensation of an average inclination of a speech waveform spectrum so as to prevent energy from being concentrated in a low-frequency range.

Furthermore, the linear prediction coefficient (LPC) and the PARCOR coefficient (partial self-correlation coefficient) can be defined as follows: That is, it is known that a high degree of proximate correlation exists between sample values $\{\chi_n\}$ of the speech waveform. Therefore, it is assumed that the following linear prediction is possible:

$$\text{Linear prediction value: } \hat{\chi}_t = -\sum_{i=1}^{p} \alpha_i \chi_{t-i} \quad \cdots (1)$$

$$\text{Linear prediction value: } \varepsilon_t = \chi_t - \hat{\chi}_t \quad (2)$$

where $\chi_t$: sample value of the speech waveform at a timing T $\{\alpha_i\}(i = 1, \cdots, p)$: linear prediction coefficient (of the p-t order)

In the implementation of the present invention, the linear prediction coefficient $\{\alpha_i\}$ is determined in such a manner that a square of an average value of the linear prediction value $\varepsilon_t$ becomes minimum.

Specifically, $(\varepsilon_t)^2$ is determined, a time average thereof is expressed as $(\overline{\varepsilon_t})^2$, and if it is assumed that

$\partial (\overline{\varepsilon_t})^2 / \partial \alpha_i = 0, i = 1, 2, \cdots, p$ can be $\{\alpha_i\}$

determined from the following formula:

$$\sum_{i=0}^{p} \alpha_i v_{|i-j|} = 0, \quad j = 1, 2, \cdots, p \quad \cdots (3)$$

At this juncture, when $[k_n]$ (n = 1 , ··· , p) is set as the PARCOR coefficient (of the p-th order) (partial self-correlation coefficient), the PARCOR coefficient $k_{n+1}$ can be defined by the following formula as a normalized correlation coefficient between a forward remainder $\varepsilon_t^{(f)}$ and a backward remainder $\varepsilon_{t-(n+1)}^{(b)}$ in linear prediction:

$$k_{n+1} = \frac{\overline{\varepsilon_t^{(f)} \cdot \varepsilon_{t-(n+1)}^{(b)}}}{\sqrt{(\overline{\varepsilon_t^{(f)})^2}} \cdot \sqrt{(\overline{\varepsilon_{t-(n+1)}^{(b)})^2}}} \quad (4)$$

where

$$\varepsilon_t^{(f)} = \chi_t - \sum_{i=1}^{n} \alpha_i \chi_{t-i},$$

$\{\alpha_i\}$: forward prediction coefficient

$$\varepsilon_{t-(n+1)}^{(b)} = \chi_{t-(n+1)} - \sum_{j=0}^{i} \beta_j \cdot \chi_{t-j},$$

$\{\beta_j\}$: backward prediction coefficient

In accordance with the present invention, it is possible to obtain the following advantages;

(1) Decline in the recognition rate with lapse of time is extremely small. Although this fact is verified by experimental results which will be described later, it is believed this is attributable to the fact that the neural network can adopt a structure which is not affected by variations in the time difference of speech.

(2) Since the variation with time of an inherent characteristic of speech is used as an input to the neural network, preprocessing for obtaining an input becomes simpler than the conventional complicated extraction of feature quantities, and the time required in this preprocessing can be made short.

Furthermore, in cases where a pitch frequency, i.e., a basic parameter of a vocal cord for which a difference between individuals is noted, is added as an input to the neural network, it is possible to improve the recognition rate of speakers particularly between adults and children and between male and the female.

Moreover, an average inclination of a speech waveform spectrum is common to speakers, and is irrelevant to the recognition of a speaker. However, in cases where the speech waveform for which the average inclination of the spectrum is not compensated is input as it is to the neural network, the neural network during learning first extracts the characteristic of the average inclination of the spectrum and takes time in extracting the ridge and trough of the spectrum necessary for speaker recognition.

In contrast, in cases where the input to the neural network is subjected to high-frequency emphasis, since the average inclination of the spectrum which is common to the speakers and, though irrelevant to the recognition, affects learning, can be compensated, the learning speed is accelerated.

(3) The arithmetic processing of the overall neural network is, in principle, simple an speedy.

(4) With respect to the neural network, constituent units thereof, in principle, operate independently, so that parallel arithmetic processing is possible. Accordingly, arithmetic processing is speedy.

(5) By virtue of the aforementioned items (2) to (4), speaker recognition processing can be effected readily on a real-time basis without using a complicated processor.

(6) In case where "the variation with time of an average inherent characteristic of speech within a fixed time" is used as an input to the neural network, processing by the neural network becomes simple, and the time required for this processing can be made shorter.

(7) In a neural network having a plurality of layers, a simple learning algorithm (back propagation) has been established, so that it is readily possible to structure a neural network which is capable of realizing a high recognition rate.

The above and other objects, features and advantages of the present invention will become more apparent from the following detailed description of the invention when read in conjunction with the accompanying drawings.

Figs. 1 - 6 are schematic diagrams illustrating embodiments of a speaker recognition system to which the present invention is applied;

Fig. 7 is a schematic diagram illustrating input speech;

Figs. 8A to 8D are schematic diagrams illustrating outputs of a band-pass filter;

Figs. 9A and 9B are schematic diagrams illustrating two types of neural network;

Fig. 10 is a schematic diagram illustrating a layered neural network; and

Fig. 11 is a schematic diagram illustrating the structure of a unit.

Before describing specific embodiments of the present invention, a description will be given of the configuration of a neural network and a learning algorithm.

(1) On the basis of its structure, the neural network can be largely classified into two types, a layered network shown in Fig. 9A and an interconnected network shown in Fig. 9B. The present invention may be arranged by using either network, but the layered network is more useful since a simple learning algorithm has been established, as will be described later.

(2) Structure of Network

As shown in Fig. 10, the layered network has a layered structure comprising an input layer, an hidden layer, and an output layer. Each layer comprises one or more units. As for connection, the respective layers are connected forwardly and unidirectionally in the order of an hidden layer, and the layers not interconnected to each other.

(3) Structure Unit

As shown in Fig. 11, a unit is modeled on neurones of the nervous system and its structure is simple. The unit receives inputs from other units, takes the sum total thereof, converts the same in accordance with a fixed rule (conversion function), and outputs a result. Variable weights each representing a degree of connecting strength are attached to connections with other units.

(4) Learning (Back Propagation)

By network learning is meant an attempt to cause an actual output to approach a targeted value (desirable output), and learning is generally effected by varying the conversion function and weight of each unit shown in Fig. 11.

In addition, as an algorithm of learning, it is possible to use back propagation described in, for example, Rumelhart, D. E., McClelland, J. L. and the PDP Research Group, PARALLEL DISTRIBUTED PROCESSING, THE MIT Press, 1986 (Reference 2).

A description will now be given of specific embodiments of the present invention with respect to respective cases where the following are used as inherent characteristics of speech: (1) an average frequency characteristic of speech, (2) a frequency characteristic of speech, (3) an average frequency characteristic of speech and an average pitch frequency, (4) an average frequency characteristic of the speech waveform subjected to high-frequency emphasis, (5) an average coefficient of linear prediction of speech, and (6) an average PARCOR coefficient (Partial self-correlation coefficient) of speech.

First, with reference to Fig. 1, a description will be given of a first embodiment in which "an average frequency characteristic of speech" referred to in item (1) above is used as an inherent characteristic of speech.

In this embodiment, a recognition system 100 comprises n-channel band-pass filters 110, averaging circuits 115, a neural network 120, and a determining circuit 130, as shown in Fig. 1.

(A) The word "tadaima" (meaning "I'm home" in Japanese) was used as a learned word, while the word "tadaima" was also used as an input word. The time difference between the learning of the word and the inputting of the word was set to zero to three months.

(B) Speakers

(1) As for speaker identification, the number of registered speakers was set at 9.

(2) As for speaker verification the number of registered speakers was set at 9, the number of learned feigners was set at 27, and the number of unlearned feigners was set at 10.

(C) Preprocessing

(1) The input speech "tadaima" is speech through band-pass filters 110 of plurality of (n) (in this embodiment, n = 8) channels, as shown in Fig. 1.

At this time, the outputs of the band-pass filters 100 are averaged by the averaging circuits 115.

(D) Processing and Determination by Neural Network

(1) The results of preprocessing (outputs of the band-pass filters 110) are input to the neural network 120 having three layers, as shown in Fig. 1. An input layer 121 comprises an n-number of units (in this embodiment, n = 8, hence 8 units) corresponding to the n-channels for preprocessing. An output layer 122 comprises nine units corresponding to the registered speakers with respect to speaker identification, and two units corresponding to a group of registered speakers and another group with respect to speaker verification.

(2) In operation, an output of the neural network 120 is input to the determination circuit 130. Then, a unit which has output a maximum value among the output values of the respective units of the output layer 122 is determined by an identification recognition section 131 and a verification recognition section 132 of the determination circuit 130 so as to effect identification or verification. In the implementation of the present invention, however, an arrangement may be alternatively provided such that the output of the neural network 120 is processed and determined not mechanically by the determination circuit 130 but manually by the operator through human knowledge upon obtaining the output of the neural network 120.

(3) Learning is carried out until output errors vis-a-vis inputs converge to a fixed level through the back propagation of the aforementioned learning algorithm, so that a network capable of ensuring a fixed recognition rate can be structured.

Incidentally, with respect to outputs, learning was carried out in such a manner that units corresponding to the respective inputting speakers are set to "1", and the other units to "0".

(EXPERIMENT)
SAMPLE "TADAIMA"

| | SPEAKER IDENTIFICATION | SPEAKER VERIFICATION |
|---|---|---|
| LEARNING | (9 REGISTERED SPEAKERS)<br>* (20 SAMPLES/ EACH)<br>TOTAL 180 SAMPLES | (9 REGISTERED SPEAKERS)<br>* (20 SAMPLES/ EACH)<br>180 SAMPLES<br>&<br>(27 FEIGNERS)<br>* (7 SAMPLES/EACH)<br>189 SAMPLES<br>TOTAL 369 SAMPLES |
| EXPERIMENT | (9 REGISTERED SPEAKERS)<br>* (10 SAMPLES /EACH)<br>IMMEDIATELY AFTER LEARNING<br>AND<br>3 MONTHS AFTER | [A]<br>REGISTERED SPEAKER'S SAMPLE<br>(90 SAMPLES)<br>(MMEDIATELY AND<br>3 MONTHS AFTERWARDS)<br>&<br>27 LEARNED UNREGISTERED<br>SPEAKERS * 3 SAMPLES /EACH<br>81 SAMPLES<br><br>[B]<br>REGISTERED SPEAKER'S SAMPLE<br>(90 SAMPLES)<br>(IMMEDIATELY AND<br>3 MONTHS AFTERWARDS)<br>&<br>10 UNLEARNED UNREGISTERED<br>SPEAKERS * 8 SAMPLES/ EACH<br>80 SAMPLES |

PREPROCESSING:

BAND PASS FILTER: LINEAR 16 CH
BAND WIDTH : 300 Hz
NO. OF DIVIDED SECTION: 4
FILTERING PERIOD: 12.8 msec

NEURAL NETWORK:

TYPE OF 3 LAYERD PERCEPTRON
NO. OF HIDDEN UNITS: HALF OF INPUT UNITS
LEARNING: BACK PROPAGATION

[RESULT]

| | IDENTIFICATION [%] | | VERIFICATION[A] [%] | | VERIFICATION[B] [%] | |
|---|---|---|---|---|---|---|
| | IMMEDIATELY | 3 MONTH AFTERWARDS | IMMEDIATELY | 3 MONTH AFTERWARDS | IMMEDIATELY | 3 MONTH AFTERWARDS |
| EXAMPLE (a) (claim 3) | 100.0 | 100.0 | 100.0 | 100.0 | 100.0 | 99.4 |
| EXAMPLE (b) (claim 4) | 100.0 | 97.8 | 100.0 | 99.4 | 100.0 | 99.4 |
| EXAMPLE (c) (claim 5) | 100.0 | 100.0 | 100.0 | 99.4 | 100.0 | 98.8 |
| EXAMPLE (d) (claim 6) | 100.0 | 100.0 | 100.0 | 100.0 | 100.0 | 100.0 |
| EXAMPLE (e) (claim 7) | 100.0 | 100.0 | 100.0 | 99.4 | 100.0 | 98.2 |
| EXAMPLE (f) (claim 8) | 100.0 | 100.0 | 100.0 | 100.0 | 100.0 | 100.0 |
| EXAMPLE (g) (claim 9) | 100.0 | 100.0 | 100.0 | 99.4 | 100.0 | 98.8 |
| EXAMPLE (h) (claim 10) | 100.0 | 100.0 | 100.0 | 100.0 | 100.0 | 100.0 |
| EXAMPLE (i) (claim 11) | 100.0 | 100.0 | 100.0 | 99.4 | 100.0 | 97.1 |
| EXAMPLE (j) (claim 12) | 100.0 | 100.0 | 100.0 | 100.0 | 100.0 | 99.4 |
| EXAMPLE (k) (claim 13) | 100.0 | 97.8 | 100.0 | 99.4 | 99.4 | 97.1 |

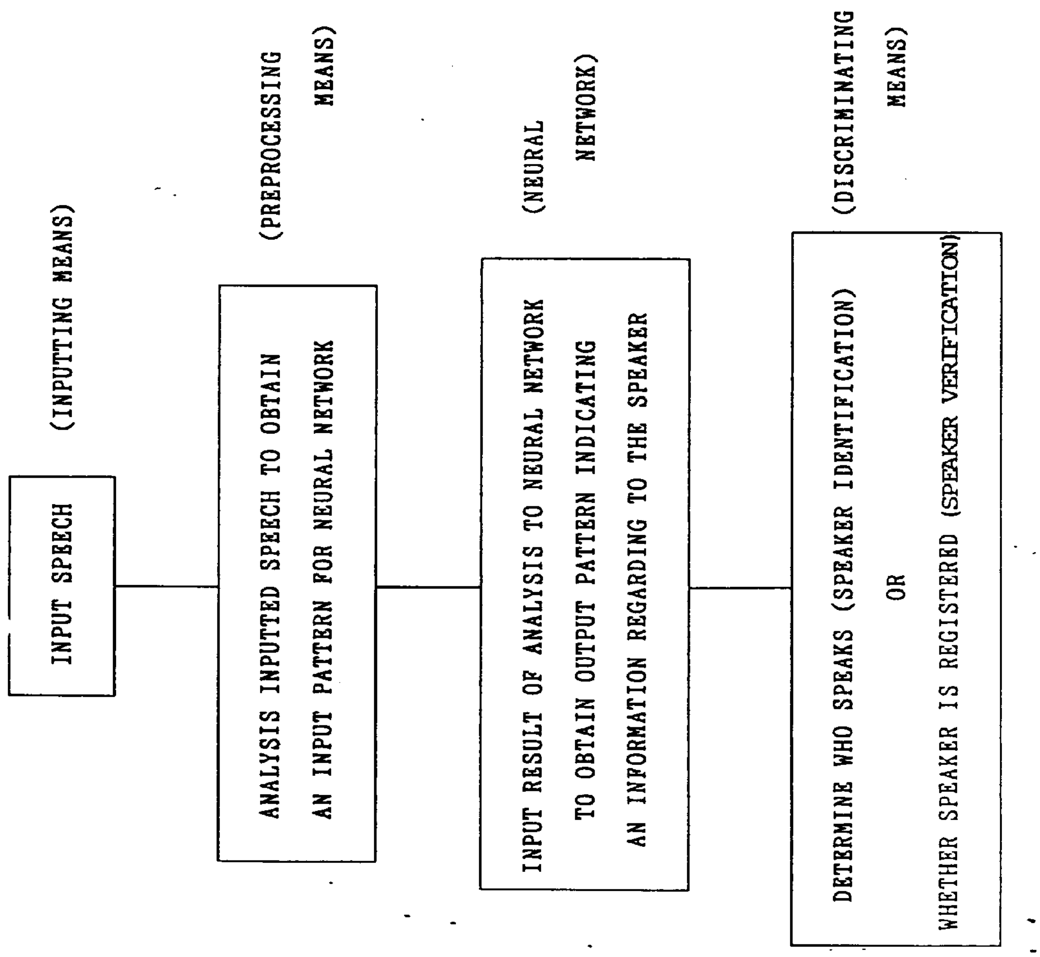


FLOWCHART OF RECOGNITION PROCESS

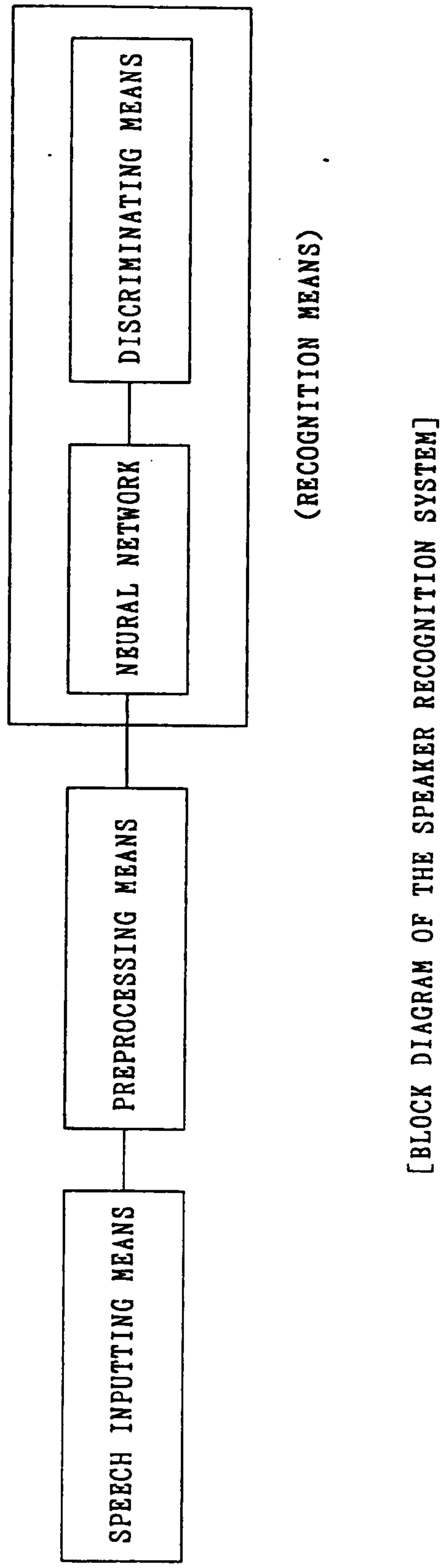


Referring not to Fig. 2, a description will be given of a second embodiment in which "a frequency characteristic of speech" referred to item (2) above is used as an inherent characteristic of speech.

A recognition system 200 comprises n-channel band-pass filters 210, averaging circuits 215, a neural network 220, and a determination circuit 230, as shown in Fig. 2.

(A) and (B)

Conditions (A) and (B) of this embodiment are the same as (A) and (B) of the first embodiment.

(C) Preprocessing

(1) The input speech "tadaima" is divided into four equal blocks in terms of time, as shown in Fig. 7.

(2) The speech waveform is passed through band-pass filters 210 having a plurality of (n) channels, as shown in Fig. 2, and a frequency characteristic is obtained for each block, i.e., for each fixed time, as shown in Figs. 8A to 8D.

At this time, the outputs of the band-pass filters 210 are respectively averaged by the averaging circuits 215 with regard to each block.

(D) Processing and Determination by Neural Network

(1) The results of preprocessing (outputs of the band-pass filters 210 for the respective blocks) are input to the neural network 220 having three layers, as shown in Fig. 2. An input layer 221 comprises 4 x n units corresponding to the four blocks and n-channels for preprocessing. An output layer 222 comprises nine units corresponding to registered speakers with respect to speaker identification and two units corresponding to a group of registered speakers and another group with respect to speaker verification.

(2) An output of the neural network 220 is input to the determination circuit 230.

Subsequently, the operation is effected in the same manner as the first embodiment, and consequently it is possible to obtain a similar effect.

Referring now to Fig. 3, a description will be given of a third embodiment in which "an average frequency characteristic of speech and an average pitch frequency" referred to in item (3) above are used as an inherent characteristic of speech and a parameter.

In this embodiment, a recognition system 300 comprises n-channel band-pass filters 310, a pitch extracting section 311, averaging in circuits 315, a neural network 320, and a determination circuit 330, as shown in Fig. 3.

(A) and (B)

Conditions (A) and (B) of this embodiment are the same as conditions (A) and (B) of the first embodiment.

(C) Preprocessing

(1) The input speech "tadaima" is divided into four equal blocks in terms of time, as shown in Fig. 7.

(2) The speech waveform is passed through band-pass filters 310 having a plurality of (n) channels (in this embodiment, n = 8), as shown in Fig. 3, and a frequency characteristic is obtained for each block, i.e., for each fixed time, as shown in Figs. 8A to 8D.

In addition, in parallel with processing by the band-pass filters 310, the speech waveform is passed through the pitch extracting section 311 so as to obtain a pitch frequency for each block, i.e., for each fixed time.

At this time, the outputs of the band-pass filters 310 and the pitch extracting section 311 are respectively averaged by the averaging circuits 315 with regard to each block.

(D) Processing and Determination by Neural Network

(1) The results of preprocessing (outputs of the averaging circuits 315 via the band-pass filters 310 and the pitch extracting section 311 for the respective blocks) are input to the neural network 220 having three layers, 12 shown in Fig. 3. An input layer 321 comprises 4 x (n + 1) units (in this embodiment, n = 8, hence 36 units) corresponding to the n-channels and four blocks for preprocessing by the band-pass filters 310 plus the one channel and four blocks for preprocessing by the pitch extracting section 311. An output layer 322 comprises nine units corresponding to registered speakers with respect to speaker identification and two units corresponding to a group of registered speakers and another group with respect to speaker verification.

(2) An output of the neural network 320 is input to the determination circuit 330.

Subsequently, the operation is effected in the same manner as the first embodiment, and consequently it is possible to obtain a similar effect.

Referring now to Fig. 4, a description will be given of a fourth embodiment in which "an average frequency characteristic of the speech waveform subjected to high-frequency emphasis" referred to in item (4) above is used as an inherent characteristic of speech.

In this embodiment, a recognition system 400 comprises an n-channel high-frequency emphasis section 410A, band-pass filters 410, averaging circuits 415, a neural network 420, and a determination circuit 430, as shown in Fig. 4.

(A) and (B)

Conditions (A) and (B) of this embodiment are the same as conditions (A) and (B) of the first embodiment.

(C) Preprocessing

(1) The input speech "tadaima" is divided into four equal blocks in terms of time, as shown in Fig. 7.

(2) As shown in Fig. 4, the speech waveform is passed through the high-frequency emphasizing filter so as to emphasize high frequencies.

Subsequently, the speech waveform subjected to high-frequency emphasis is passed through band-pass filters 410 having a plurality of (n) channels (in this embodiment, n = 8), and a frequency characteristic is obtained for each block, i.e., for each fixed time, as shown in Figs. 8A to 8D.

At this time, the outputs of the band-pass filters 410 are respectively averaged by the averaging circuits 415 with regard to each block.

It should be noted that the high-frequency emphasizing operation in accordance with this embodiment may be effected not before the input to the band-pass filters 410 but after the output from the band-pass filters 410.

(D) Processing and Determination by Neural Network

(1) The results of preprocessing (outputs of the averaging circuits 415 via the band-pass filters 410 for the respective blocks) are input to the neural network 420 having three layers, as shown in Fig. 4. An input layers 421 comprises 4 x n units (in this embodiment, n = 8, hence 32 units) corresponding to the four blocks and n-channels for preprocessing. An output layer 422 comprises nine units corresponding to registered speakers with respect to speaker identification and two units corresponding to a group of registered speakers and another group with respect to speaker verification.

(2) An output of the neural network 420 is input to the determination circuit 430.

Subsequently, the operation is effected in the same manner as the first embodiment, and consequently it is possible to obtain a similar effect.

Referring now to Fig. 5, a description will be given of a fifth embodiment in which "an average coefficient of linear prediction of speech" referred to in item (5) above is used as an inherent characteristic of speech.

In this embodiment, a recognition system 500 comprises an LPC analysis section 510, averaging circuits 515, a neural network 520, and a determination circuit 530, as shown in Fig. 5.

(A) and (B)

Conditions (A) and (B) of this embodiment are the same as conditions (A) and (B) of the firm embodiment.

(C) Preprocessing

(1) The input speech "tadaima" is divided into four equal blocks in terms of time, as shown in Fig. 7.

(2) As shown in Fig. 5, the speech waveform is passed through the LPC analysis section 510 so as to effect linear prediction and analysis for plurality of (p) (in this embodiment, p = 12) of sample values for each block, i.e., for each fixed time, thereby calculating an average coefficient of linear prediction for each block.

At this time, the coefficient of linear prediction of the p-th order, which is the calculated result of the LPC analysis section 510, is averaged by the averaging circuits 515 for the respective blocks.

(D) Processing and Determination by Neural Network

(1) The results of preprocessing (outputs of the averaging circuits 515 via the LPC analysis section 510 for the respective blocks) are input to the neural network 520 having three layers, as shown in Fig. 5. An input layer 521 comprises 4 x p units (in this embodiment, p = 12, hence 48 units) corresponding to the four blocks and p-sample values for preprocessing. An output layer 522 comprises nine units corresponding to registered speakers with respect to speaker identification and two units corresponding to a group of registered speakers and another group with respect to speaker verification.

(2) An output of the neural network 520 is input to the determination circuit 530.

Subsequently, the operation is effected in the same manner as the firm embodiment, and consequently it is possible to obtain a similar effect.

Finally, with reference to Fig. 6, a description will be given by a sixth embodiment in which "an average PARCOR coefficient" referred to in item (6) above is used as an inherent characteristic of speech.

In this embodiment, a recognition system 600 comprises a PARCOR analysis section 610, averaging circuits 615, a neural network 620, and a determination circuit 630, as shown in Fig. 6.

(A) and (B)

Conditions (A) and (B) of this embodiment are the same as conditions (A) and (B) of the first embodiment.

(C) Preprocessing

(1) The input speech "tadaima" is divided into four equal blocks in terms of time, as shown in Fig. 7.

(2) As shown in Fig. 6, partial correlation analysis is carried out for a plurality of (p) (in this embodiment, p = 12) of sample values for each block, i.e., for each fixed time, thereby calculating an average PARCOR coefficient for each block.

At this time, the PARCOR coefficient of the p-th order, which is the calculated result of the PARCOR analysis section 610, is averaged by the averaging circuits 615 for the respective blocks.

(D) Processing and Determination by Neural Network

(1) The results of preprocessing (outputs of the averaging circuits 615 via the PARCOR analysis section 610 for the respective blocks) are input to the neural network 620 having three layers, as shown in Fig. 6. An input layer 621 comprises 4 x p units (in this embodiment, p = 12, hence 48 units) corresponding to the four blocks and p-sample values for preprocessing. An output layer 622 comprises nine units corresponding to registered speakers with respect to speaker identification and two units corresponding to a group of registered speakers and another group with respect to speaker verification.

(2) An output of the neural network 620 is input to the determination circuit 630.

Subsequently, the operation is effected in the same manner as the first embodiment, and consequently it is possible to obtain a similar effect.

It should be noted that in implementing the present invention, as an input to the neural network, it is possible to simply use an "average inherent characteristic of speech" without using "the variation with time of an inherent characteristic of speech".

## Claims

1. A speaker recognition system for recognizing a speaker on the basis of input speech, comprising:
   - means for inputting said speech;
   - recognition means for recognizing said speaker including a neural network (120,220,320,420,520,620), and
   - preprocessing means (110,115,210,215,310,311,315,410A, 410,415,510,515,610,615) connected to said neural network (120,220,320,420,520,620) for analyzing the inputted speech,
   - discriminating means (130,230,330,430,530,630) connected to said neural network (120,220,320, 420,520,620) for receiving the output thereof and providing an output indicating recognition result, characterized in that:
   said preprocessing means (110,115,210,215,310,311,315,410A, 410,415,510,515,610,615) includes:
   a) means for dividing said inputted speech into a plurality of equal blocks in terms of time;
   b) means (110,210,310,311,410,510,610) for extracting a series of features for each block of inputted speech;
   c) means for averaging (115,215,315,415,515,615) said series of features with regard to each block and for providing the input to said neural network (120,220,320,420,520,620).

2. A speaker recognition system according to claim 1, wherein said feature quantity of said input voice is selected from a group consisting of a frequency characteristic of said voice, a pitch frequency of said voice, a frequency characteristic of said voice whose high frequencies are subjected to emphasis, a linear prediction coefficient of said voice, and a PARCOR (partial self-correlation coefficient of said voice).

3. A speaker recognition system according to claim 1, said system further comprising:
   a function selection section for selecting a speaker identification function or a speaker verification function or both;
   a registered speaker count setting section for setting the number of speakers to be preregistered in said system; and
   a mode selection section for selecting a mode from a mode in which learning is executed by said neural network or a mode in which speaker recognition is activated using said neural network that has completed said learning.

## Patentansprüche

1. Sprechererkennungssystem zum Erkennen eines Sprechers auf der Basis der Eingabesprache mit:
   - einer Einrichtung für die Eingabe der Sprache;
   - einer Erkennungseinrichtung zum Erkennen des Sprechers mit einem neuronalen Netzwerk (120,220,320,420,520,620) und
   - einer Vorverarbeitungseinrichtung (110,115,210,215,310,311,315,410A,410,415,510,515, 610,615), welche mit dem neuronalen Netzwerk (120,220,320,420,520,620) verbunden ist, zum Analysieren der eingegebenen Sprache,
- einer Diskriminierungseinrichtung (130,230,330,430,530,630), welche mit dem neuronalen Netzwerk (120,220,320,420,520,620) verbunden ist, zum Empfangen des Ausgangs davon und zum Liefern einer ein Erkennungsergebnis anzeigenden Ausgabe,

dadurch gekennzeichnet, daß:
die Vorverarbeitungseinrichtung (110,115,210,215,310,311,315,410A,410,415,510,515,610, 615) folgendes umfaßt:

a) Einrichtung zur Teilung der eingegebenen Sprache in eine Mehrzahl von gleichen Blöcken in bezug auf Zeit;
b) Einrichtung (110,210,310,311,410,510,610) zum Entnehmen einer Reihe von Merkmalen für jeden Block eingegebener Sprache;
c) Einrichtung zur Durchschnittsbildung (115,215,315,415,515,615) der Reihe von Merkmalen bezogen auf jeden Block und zum Liefern der Eingabe zu dem neuronalen Netzwerk (120,220,320,420,520,620).

2. Sprechererkennungssystem gemäß Anspruch 1, bei dem die Merkmalsgröße der Eingabestimme aus der Gruppe bestehend aus einem Frequenzgang der Stimme, einer Tonlagenfrequenz der Stimme, einem Frequenzmerkmal der Stimme, deren hohe Frequenzen hervorgehoben werden, einem Koeffizienten zur linearen Voraussage der Stimme und einem PARCOR (Koeffizienten der teilweisen Selbstkorrelation der Stimme) ausgewählt ist.

3. Sprechererkennungssystem gemäß Anspruch 1, wobei das System des weiteren umfaßt:
einen Funktionsauswahlabschnitt zur Auswahl einer Sprecheridentifizierungsfunktion oder einer Sprecherverifizierungsfunktion oder beidem;
einen Abschnitt zum Einstellen der Anzahl registrierter Sprecher, um die Anzahl der in dem System vorher zu registrierenden Sprecher einzustellen; und
einen Modusauswahlabschnitt zur Auswahl eines Modus aus einem Modus, bei welchem Lernen durch das neuronale Netzwerk durchgeführt wird, oder einem Modus, bei welchem unter Verwendung des neuronalen Netzwerks, welches das Lernen abgeschlossen hat, die Sprechererkennung aktiviert wird.

## Revendications

1. Système de reconnaissance de locuteur pour reconnaître un locuteur sur la base d'une parole d'entrée, comprenant :

un moyen pour entrer ladite parole ;
un moyen de reconnaissance pour reconnaître ledit locuteur, incluant un réseau de neurones (120, 220, 320, 420, 520, 620) ; et
un moyen de prétraitement (110, 115, 210, 215, 310, 311, 315, 410A, 410, 415, 510, 515, 610, 615) connecté audit réseau de neurones (120, 220, 320, 420, 520, 620) pour analyser la parole entrée ;
un moyen de détermination (130, 230, 330, 430, 530, 630) connecté audit réseau de neurones (120, 220, 320, 420, 520, 620) pour recevoir sa sortie et pour délivrer une sortie indiquant le résultat de reconnaissance ;
caractérisé en ce que :
ledit moyen de prétraitement (110, 115, 210, 215, 310, 311, 315, 410A, 410, 415, 510, 515, 610, 615) comprend :

a) un moyen pour diviser ladite parole entrée en une pluralité de blocs de durée égale ;
b) un moyen (110, 210, 310, 311, 410, 510, 610) pour extraire une série de particularités pour chaque bloc de parole entrée ;
c) un moyen pour faire la moyenne (115, 215, 315, 415, 515, 615) de ladite série de particularités en ce qui concerne chaque bloc et pour délivrer l'entrée audit réseau de neurones (120, 220, 320, 420, 520, 620).

2. Système de reconnaissance de locuteur selon la revendication 1, dans lequel ladite quantité de particularités de ladite parole d'entrée est sélectionnée dans un groupe constitué d'une caractéristique de fréquence de ladite parole, d'une fréquence de hauteur de son de ladite parole, d'une caractéristique de fréquence de ladite parole dont les hautes fréquences sont soumises à accentuation, d'un coefficient de prédiction linéaire de ladite parole et d'un coefficient PARCOR (coefficient d'autocorrélation partielle) de ladite parole.

3. Système de reconnaissance de locuteur selon la revendication 1, ledit système comprenant en outre :

une section de sélection de fonction pour sélectionner une fonction d'identification de locuteur ou une fonction de vérification de locuteur, ou les deux ;

une section de réglage de comptage de locuteurs enregistrés pour fixer le nombre de locuteurs à préenregistrer dans ledit système ; et

une section de sélection de mode pour sélectionner un mode parmi un mode dans lequel l'apprentissage est effectué par ledit réseau de neurones et un mode dans lequel la reconnaissance de locuteur est activée en utilisant ledit réseau de neurones qui a terminé ledit apprentissage.

FIG. 1

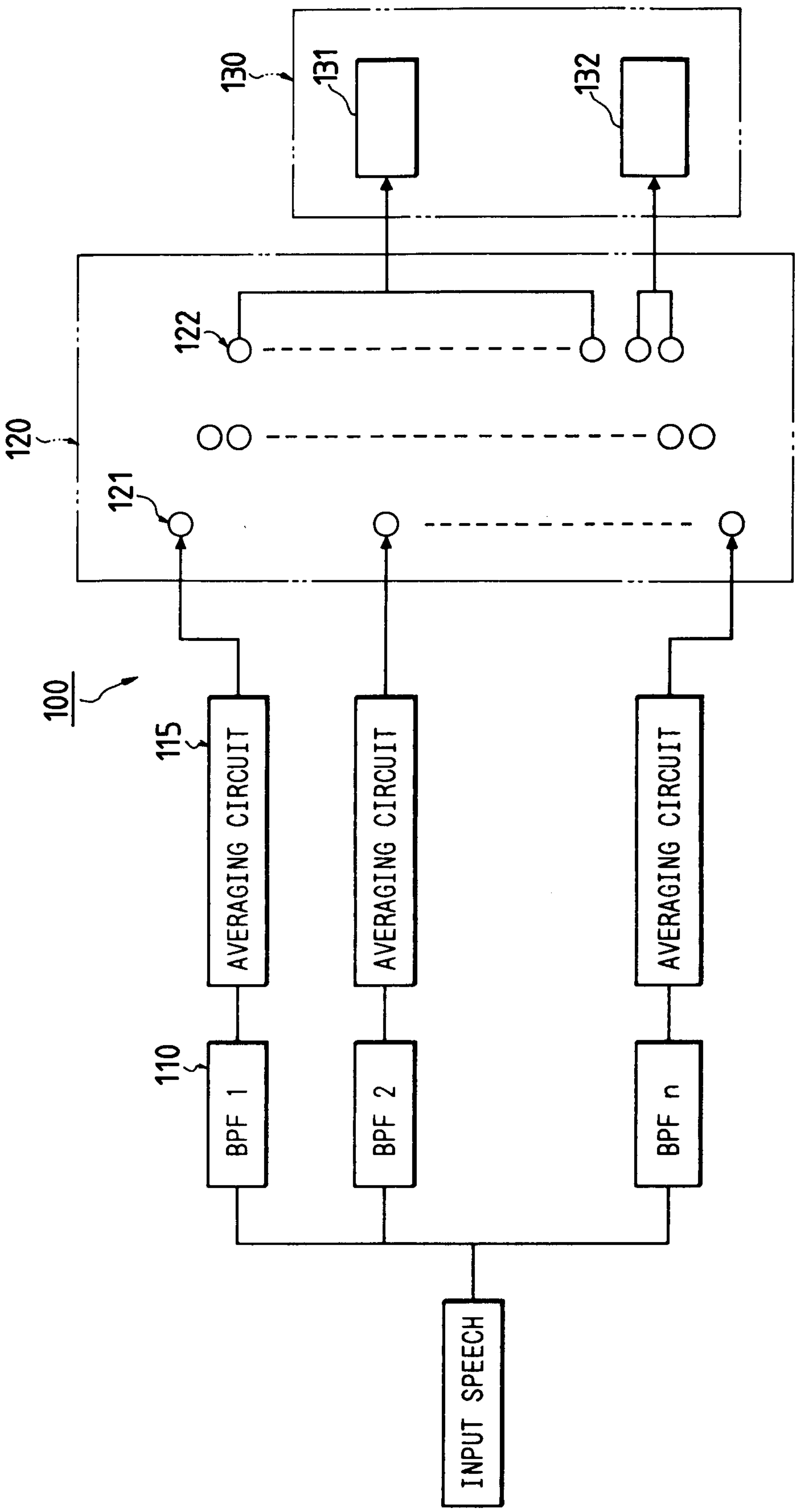
130
131
132
120
121
122
100
115
AVERAGING CIRCUIT
AVERAGING CIRCUIT
AVERAGING CIRCUIT
110
BPF 1
BPF 2
BPF n
INPUT SPEECH

FIG. 2

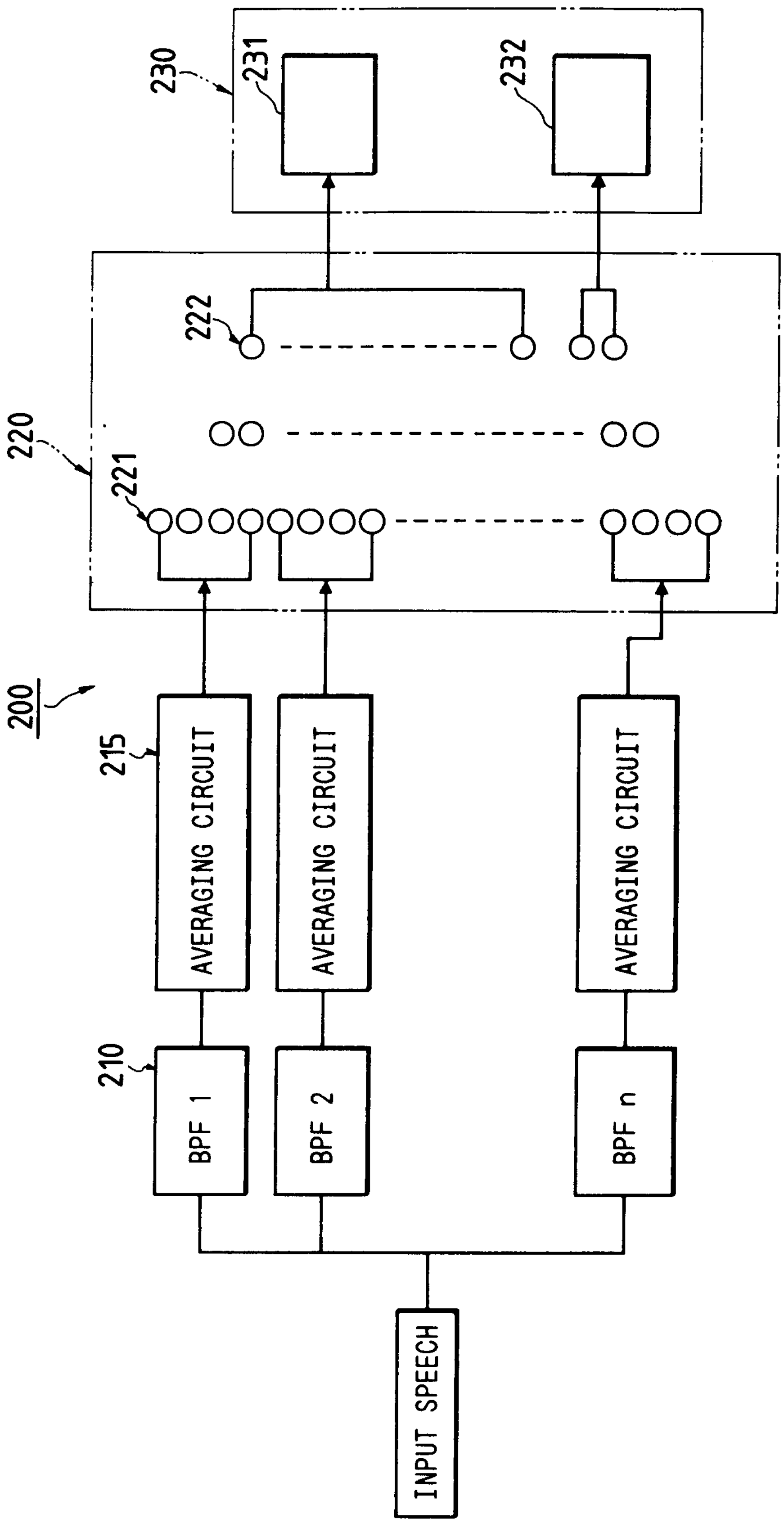
200
INPUT SPEECH
BPF 1
BPF 2
BPF n
210
AVERAGING CIRCUIT
AVERAGING CIRCUIT
AVERAGING CIRCUIT
215
220
221
222
230
231
232

FIG. 3

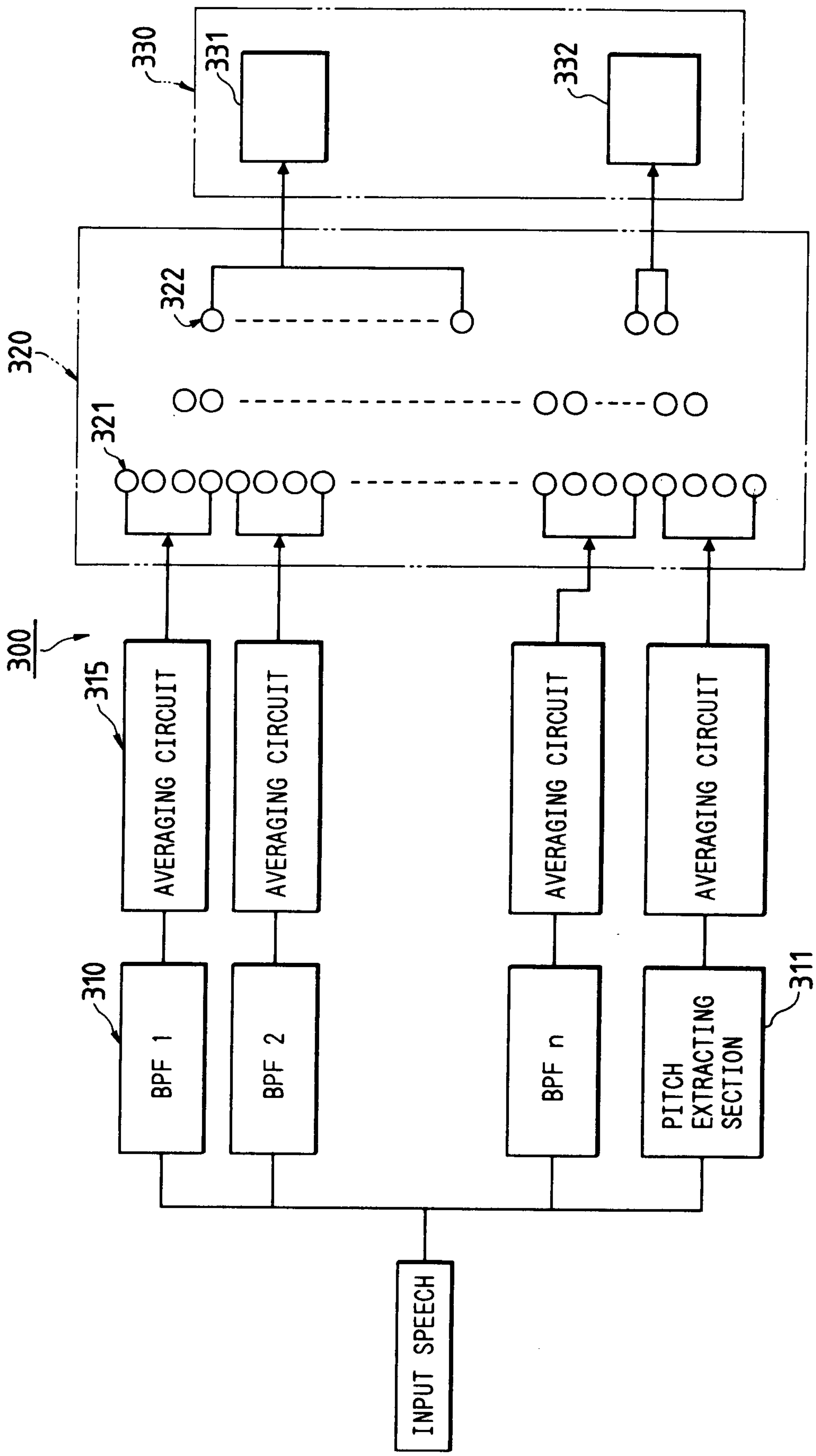
300
330
331
332
320
321
322
315
AVERAGING CIRCUIT
AVERAGING CIRCUIT
AVERAGING CIRCUIT
AVERAGING CIRCUIT
310
BPF 1
BPF 2
BPF n
PITCH EXTRACTING SECTION
311
INPUT SPEECH

FIG. 4

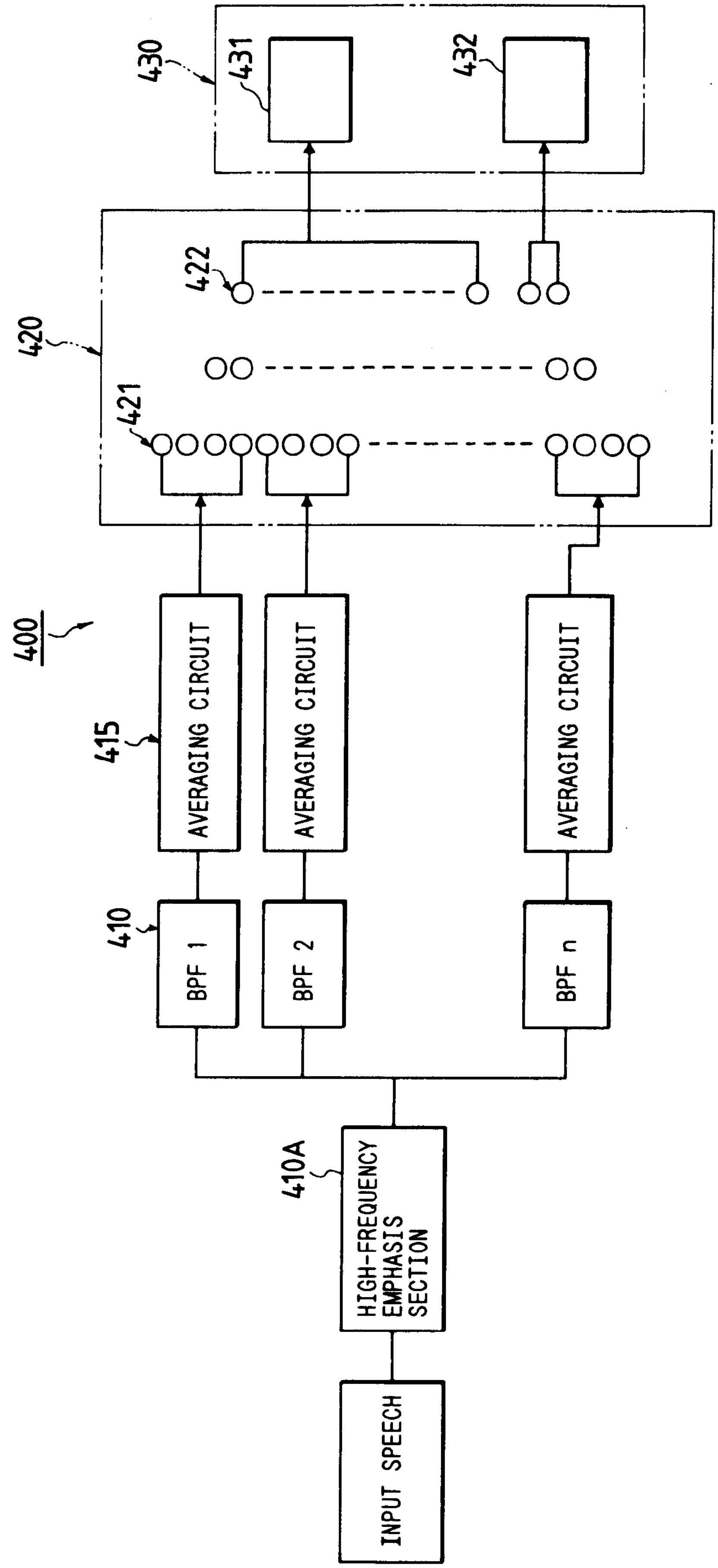

400
INPUT SPEECH
HIGH-FREQUENCY EMPHASIS SECTION
410A
BPF 1
BPF 2
BPF n
410
AVERAGING CIRCUIT
AVERAGING CIRCUIT
AVERAGING CIRCUIT
415
420
421
422
430
431
432

FIG. 5

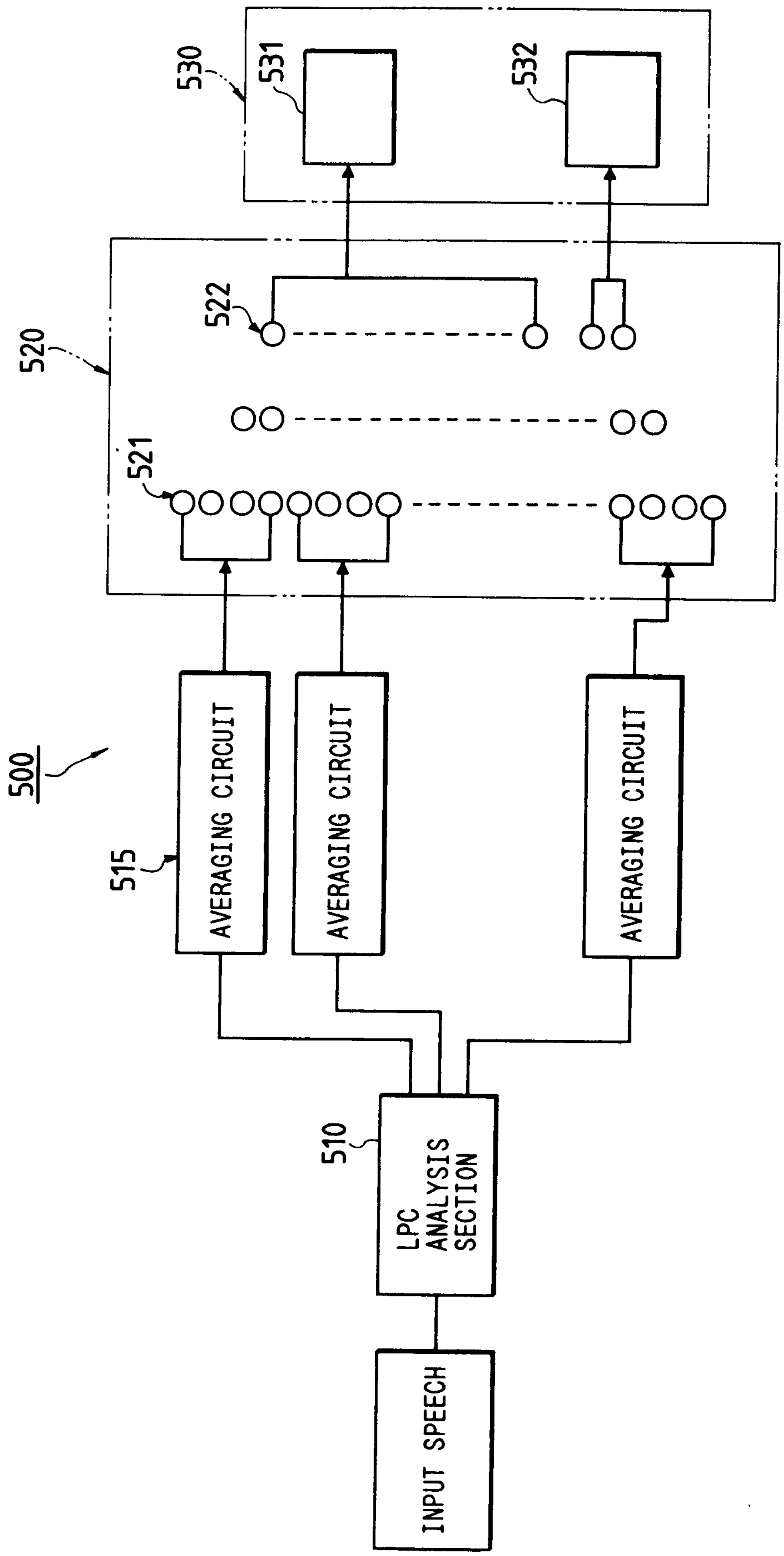
500
INPUT SPEECH
LPC ANALYSIS SECTION
510
AVERAGING CIRCUIT
515
AVERAGING CIRCUIT
AVERAGING CIRCUIT
520
521
522
530
531
532

FIG. 6

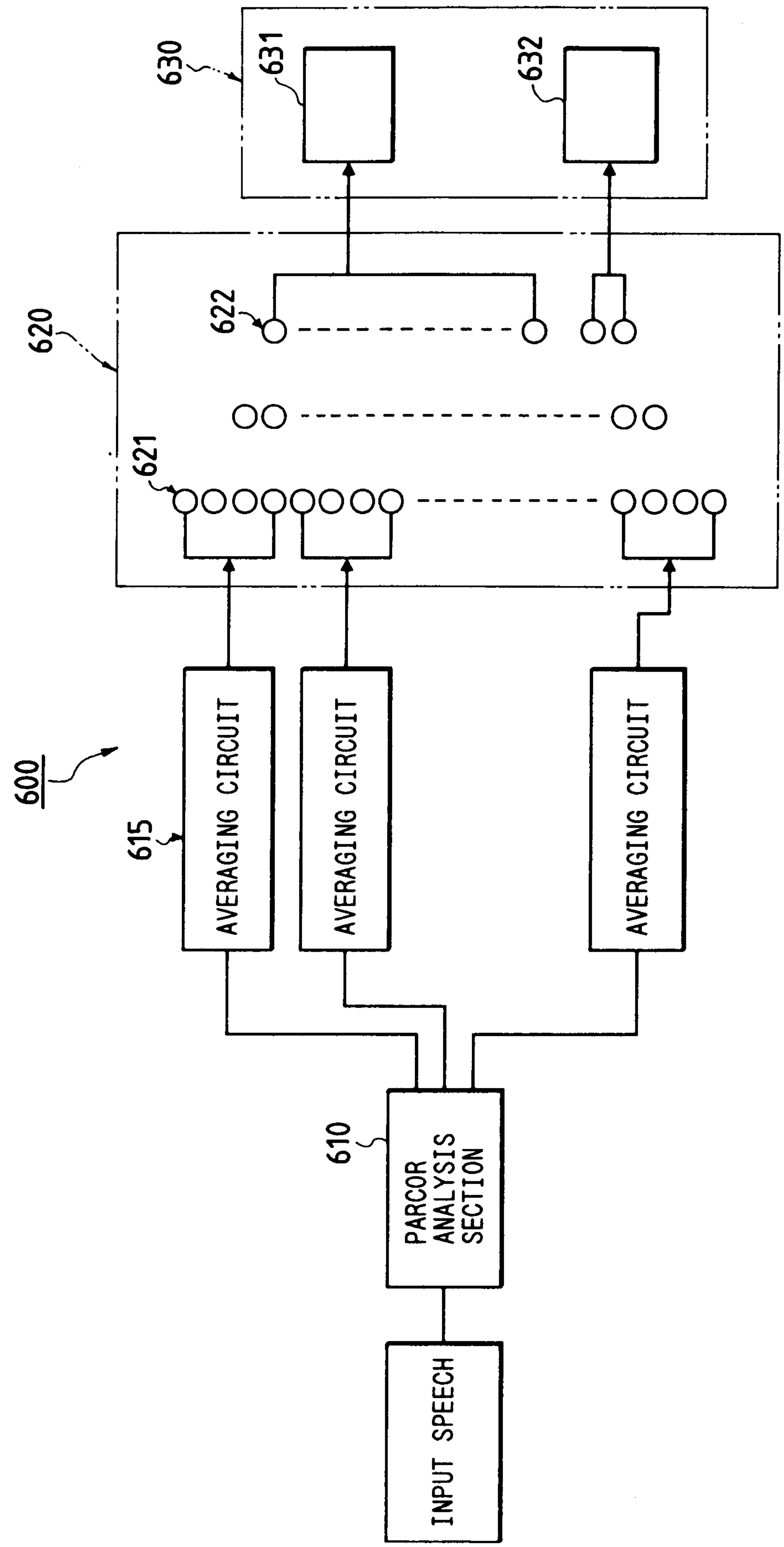
600
630
631
632
620
622
621
615
AVERAGING CIRCUIT
AVERAGING CIRCUIT
AVERAGING CIRCUIT
610
PARCOR ANALYSIS SECTION
INPUT SPEECH

FIG. 7

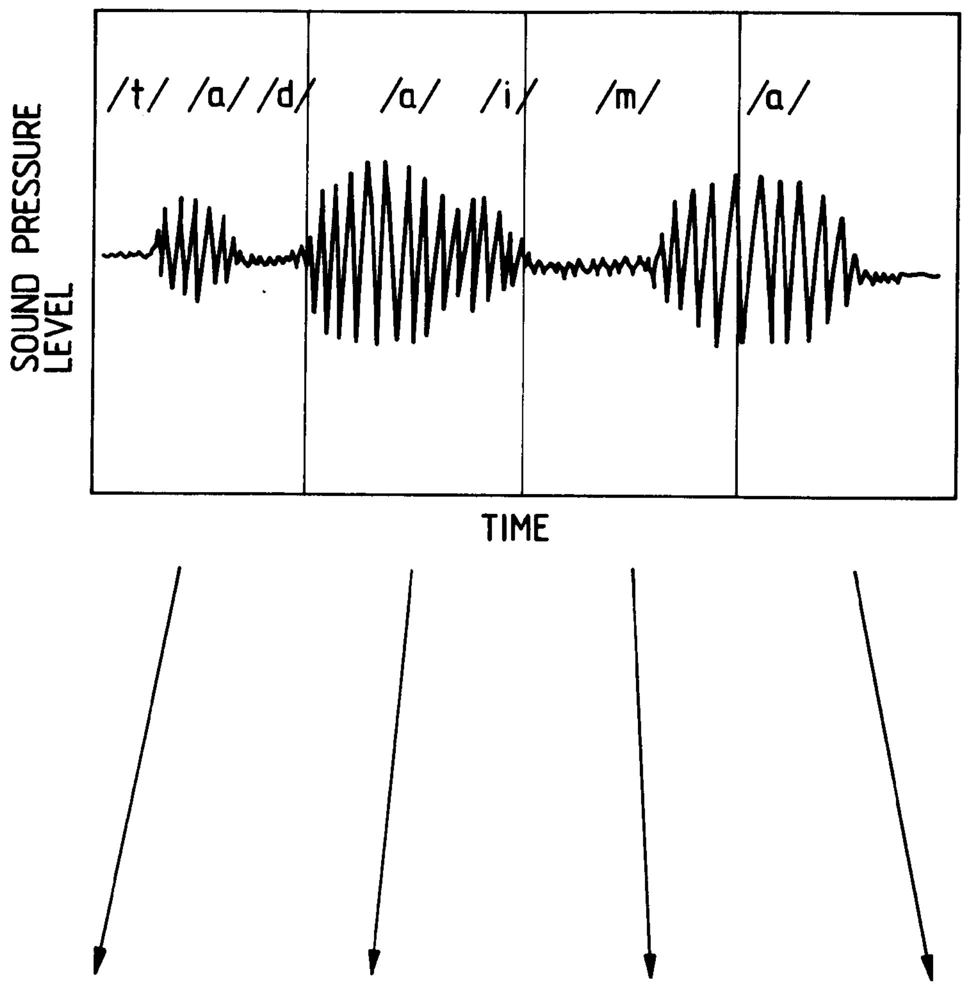


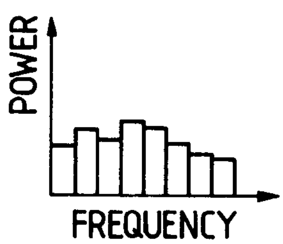


FIG. 8A

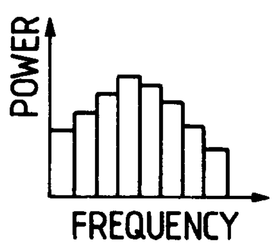


FIG. 8B

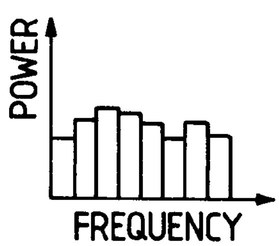


FIG. 8C

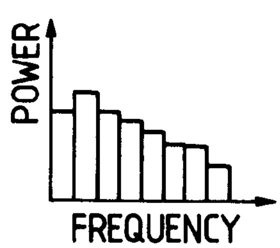


FIG. 8D

FIG. 9A

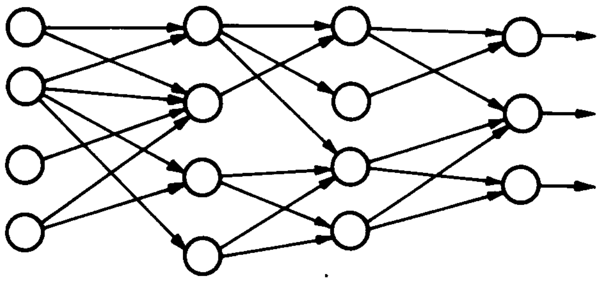

FIG. 9B

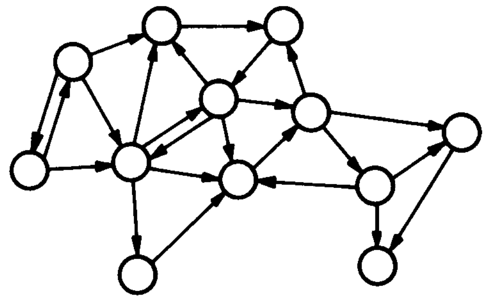

FIG. 10

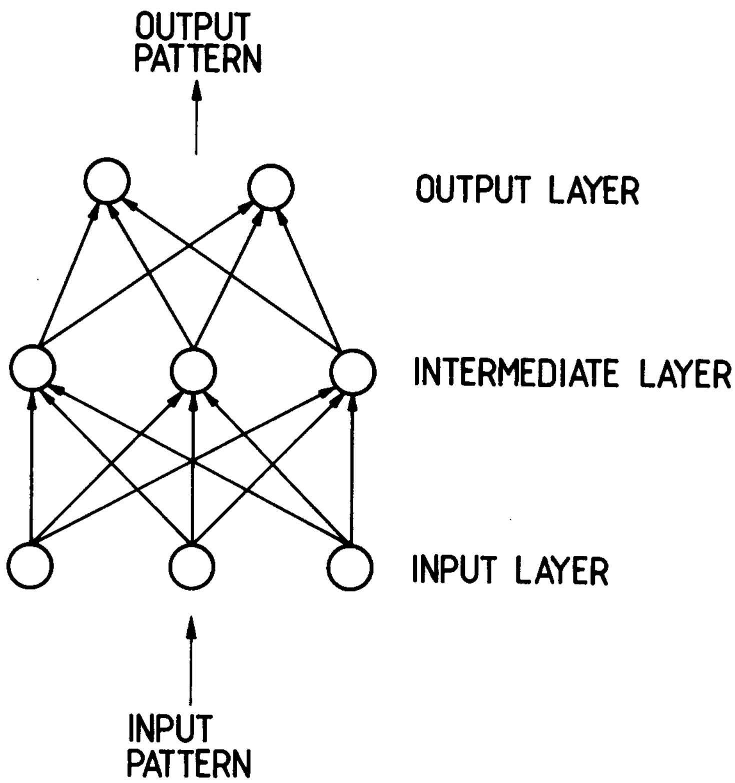

FIG. 11

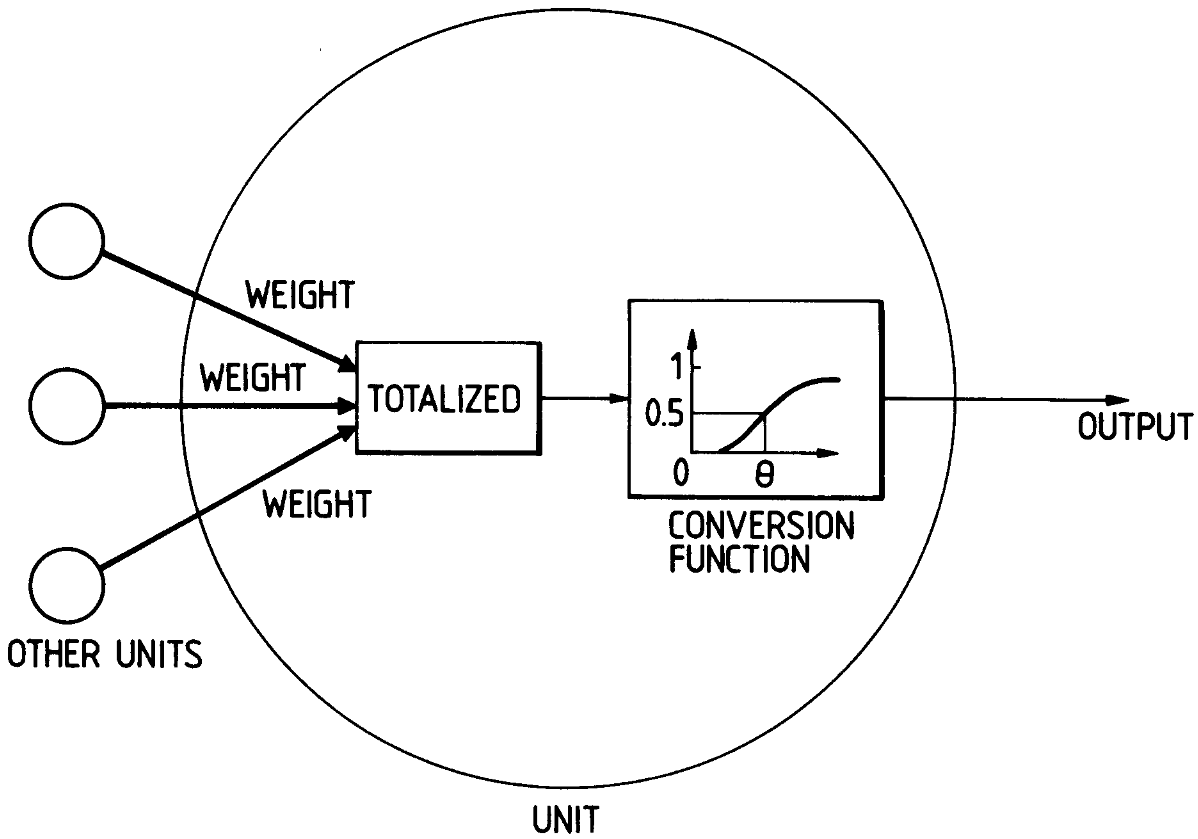
WEIGHT
WEIGHT
WEIGHT
TOTALIZED
1
0.5
0
θ
CONVERSION FUNCTION
OUTPUT
OTHER UNITS
UNIT